# EUROPÄISCHE PATENTSCHRIFT

(11) **EP 1 799 784 B1**
(45) Veröffentlichungstag und Bekanntmachung des Hinweises auf die Patenterteilung: **28.04.2010**
(21) Anmeldenummer: 05795627.8
(22) Anmeldetag: 26.09.2005
(51) Int. Cl.: C09D 183/14, G02B 1/10

(54) **TRANSPARENTE BESCHICHTUNGSZUSAMMENSETZUNG UND VERFAHREN ZU DEREN HERSTELLUNG SOWIE ENTSPRECHEND TRANSPARENT BESCHICHTETE SUBSTRATE**
TRANSPARENT COATING COMPOSITION AND METHOD FOR THE PRODUCTION THEREOF AND CORRESPONDINGLY TRANSPARENT-COATED SUBSTRATES
COMPOSITION DE REVETEMENT TRANSPARENTE, SON PROCEDE DE PRODUCTION ET SUBSTRAT REVETU CORRESPONDANT

(30) Priorität: 24.09.2004 DE 102004046406
(43) Veröffentlichungstag der Anmeldung: 27.06.2007
(73) Patentinhaber: Fraunhofer-Gesellschaft zur Förderung der angewandten Forschung e.V., 80686 München (DE)
(72) Erfinder: DECLERCK, Pélagie, 97234 Reichenberg (DE); OLSOWSKI, Birke, 97209 Veitshöchheim (DE); HOUBERTZ-KRAUSS, Ruth, 97440 Werneck (DE); POPALL, Michael, 97072 Würzburg (DE)
(74) Vertreter: Pfenning, Meinig & Partner GbR
(86) Internationale Anmeldenummer: PCT/EP2005/010386
(87) Internationale Veröffentlichungsnummer: WO 2006/032536

(56) Entgegenhaltungen:
- EP-A- 0 233 355
- EP-A- 0 429 325
- EP-A- 0 486 469
- US-A- 5 668 237
- US-B1- 6 773 465

## Beschreibung

Die Erfindung betrifft ein Verfahren zur Herstellung einer transparenten Beschichtungszusammensetzung, die im Wesentlichen auf einer Polykondensationsreaktion beruht. Die durch dieses Verfahren hergestellten Beschichtungszusammensetzungen basieren auf einem vollständig durchkondensierten anorganischen silikatischen Netzwerk, während das organische Netzwerk noch nicht ausgebildet ist. Ebenso betrifft die Erfindung ein Verfahren zur Beschichtung von Substraten mit derartigen Beschichtungszusammensetzungen unter Ausbildung eines beschichteten Substrates, bei dem neben dem anorganischen Netzwerk durch den Aushärtevorgang auch das organische Netzwerk ausgebildet ist. Derartige Beschichtungszusammensetzungen und beschichtete Substrate finden breite Anwendungen in allen optischen Anwendungsfeldern.

Für viele optische Anwendungen werden transparente Materialien mit einem hohen Brechungsindex gefordert. Silikatverbindungen SiO₂ besitzen zwar gute optische Eigenschaften, haben aber in der Regel eine geringe Flexibilität, und eine hohe Sprödigkeit. Zudem erfordern sie Hochtemperatur-Bedingungen bei der Herstellung. Zur Mustererzeugung, z.B. durch Ätzverfahren mit Reaktivgasen, sind gewöhnlich mehr als zwei Verfahrensschritte erforderlich, was wiederum zu hohen Prozesskosten führt. Ein weiterer Nachteil hinsichtlich der optischen Eigenschaften ist es, dass amorphes Silicium einen Brechungsindex von nicht mehr als 1,46 aufweist, während kristallines Silicium einen Brechungsindex von 1,55 aufweisen kann.

Organische Polymere mit hohem Brechungsindex scheinen die zuvor beschriebenen Nachteile zu überwinden. Allerdings besitzen organische Polymere für optische Anwendungen, wie z.B. Polymethylmethacrylat (PMMA), das in optischen Kunststofffasern eingesetzt wird, eine geringe thermische Stabilität (Tg von 85 bis 105 °C), einen Brechungsindex von etwa 1,49 und eine relativ geringe chemische Beständigkeit. Die US 4,644,025 stellt Polymere aus Allyl- und Methacryl-Verbindungen von mit Jod substituierten Benzoesäure-Derivaten bereit. Hierbei wird ein hoher Brechungsindex durch die Anwesenheit von mit Jod substituierten Verbindungen erzielt. Der höchste hier erreichte Brechungsindex beträgt 1,62. Aus der US 4,975,223 ist ein Verfahren zur Herstellung eines transparenten Polymers mit einem Brechungsindex zwischen 1,6 und 1,62 bekannt. Ein wesentlicher Nachteil dieses Materials ist, dass es aus mit Halogen substituierten aromatischen Monomeren gebildet ist, die aus Umweltaspekten problematisch sind.

Um die vorteilhaften Eigenschaften von anorganischen und organischen Materialien zu kombinieren, sind verschiedene Synthesestrategien für die Herstellung anorganischer und organischer Materialien beschrieben worden. Der Einbau von Partikeln in organischen/anorganischen Matrizes in zwei- oder mehrstufigen Synthesen stellt hier die gängigste Methode zur Erhöhung des Brechungsindex dar. Gemäß der US 6,656,990 werden Nanopartikel aus Metalloxiden (< 75 nm) mit metallorganischen Kupplungsreagenzien kondensiert, wobei das metallorganische Kupplungsreagenz Funktionalitäten aufweist, die den Brechungsindex des Harzes erhöhen. Der Brechungsindex des Harzes wird mit 1,79 (bei 633 nm) angegeben. Allerdings weisen die hier beschriebenen Materialien Brom- oder Jod-Verbindungen auf, die bekanntermaßen den Brechungsindex erhöhen. Zusätzlich wird hier berichtet, dass die Synthese von Oxid-Nanopartikeln grundsätzlich in wässrigen oder alkoholischen Medien durchgeführt wird, wodurch es zur Adsorption von OH-Gruppen an der Oberfläche der Nanopartikel kommt. Dies führt zu einer starken Adsorption bei etwa 1550 nm. Ein weiteres in dieser Druckschrift beschriebenes Verfahren beruht darauf, Metalloxid-Pulver in einem Lösungsmittel zu lösen und dann in das silikatische Netzwerk einzubauen. In diesem Zusammenhang wird allerdings berichtet, dass dies zu agglomerierten Nanopartikeln führt.

Als weitere Synthesestrategie ist bekannt, in einer einstufigen Reaktion ein organisches Siloxan-Netzwerk mit einer anorganischen Matrix durch Hydrolyse und Polykondensation zwischen dem organischen Siloxan-Netzwerk und dem metallischen Precursor zu verbinden. So beschreibt die US 6,482,525 die Bindung eines organischen Siloxan-Netzwerks an hydrolisierbare Metallverbindungen, wie z.B. Böhmit, um die Abriebfestigkeit von PMMA-Oberflächen zu erhöhen.

In der US 6,162,853 werden ein einstufiges Syntheseverfahren und Kondensationsreaktionen von Metalloxid-Nanopartikeln mit einem organischen silikatischen Netzwerk verglichen. Hier wird berichtet, dass durch die Verwendung von Nanopartikeln ein höherer Brechungsindex erzielt werden kann, der bei 1,5435 liegt.

Aus H. Schmidt und B. Seiferling, Mater.Res.Soc.Symp. 73, 739 (1986) sind Polykondensationsreaktionen zwischen einem Epoxysilan und Silicium-, Aluminium- oder Titanalkoxiden bekannt. Hier wird der Brechungsindex in Abhängigkeit vom Metalloxid-Gehalt untersucht und festgestellt, dass sich der Brechungsindex mit steigendem Metalloxid-Gehalt erhöht. Gleichzeitig wird hier festgestellt, dass im Hinblick auf die korrespondierenden anorganischen Systeme der Brechungsindex überraschend niedrig ist. Der höchste hier beschriebene Brechungsindex ist dabei kleiner als 1,55. Wird das Epoxysilan vollständig durch Diphenylsilandiol ersetzt, kann der Brechungsindex auf 1,68 erhöht werden, allerdings enthält dann das Harz keine mit UV-Licht polymerisierbaren Gruppen mehr. Auf der anderen Seite erthält man auch schon bei geringsten Mengen an Epoxysilan einen maximalen Brechungsindex unterhalb von 1,6.

Ausgehend hiervon war es Aufgabe der vorliegenden Erfindung, die aus dem Stand der Technik bekannten Nachteile zu überwinden und ein einfach zu handhabendes Verfahren bereitzustellen, mit dem Beschichtungen mit höheren Brechungsindices bei gleichzeitig hoher chemischer Beständigkeit sowie mechanischer und thermischer Stabilität ermöglicht werden.

Diese Aufgabe wird durch das Verfahren mit den Merkmalen des Anspruchs 1, die transparente Beschichtungszusammensetzung mit den Merkmalen des Anspruchs 12, das Verfahren zur Beschichtung eines Substrats mit den Merkmalen des Anspruchs 16 und das transparent beschichtete Substrat mit den Merkmalen des Anspruchs 20 gelöst. Die weiteren abhängigen Ansprüche zeigen vorteilhafte Weiterbildungen auf.

Erfindungsgemäß wird ein Verfahren zur Herstellung einer transparenten Beschichtungszusammensetzung durch eine Polykondensation bereitgestellt. Ausgegangen wird hierbei von
a) mindestens einem zur Ausbildung eines anorganischen Netzwerks geeignetem hydrolisierbarem und/oder kondensierbarem Silan, das mindestens eine thermisch und/oder photochemisch vernetzbare funktionelle Gruppe zur Ausbildung eines organischen Netzwerks aufweist, und
b) mindestens einer Metallverbindung der allgemeinen Formel I

   MXₚ I

   mit M ausgewählt aus der Gruppe bestehend aus Elementen der Gruppen Ib bis VIIIb des Periodensystems, X einem entsprechenden Gegenion zum Ladungsausgleich oder einem Liganden und p = 2 bis 4,
   in einem organischen Lösungsmittel, gegebenenfalls in Gegenwart eines Katalysators,
wobei die Kondensation bei einer Temperatur zwischen 20 und 80°C über eine Reaktionsdauer von 24 bis 144 h durchgeführt wird und Temperatur und Reaktionsdauer derart aufeinander abgestimmt werden, dass eine Vernetzung der funktionellen Gruppen und damit die Ausbildung eines organischen Netzwerks verhindert wird.

Die Beschichtungszusammensetzung wird durch eine katalytisch kontrollierte Polykondensation synthetisiert. Alternativ kann der Polykondensation auch eine Hydrolyse vorgeschaltet sein. Hierzu wird dann bevorzugt eine stöchiometrische Menge Wasser zugesetzt, um die Precurser teilweise zu hydrolysieren.

Bevorzugt wird eine metallorganische Verbindung, insbesondere ein Organosiloxan, das UV-Licht und/oder thermisch härtbare Gruppen aufweist, eingesetzt. Hierzu zählen bevorzugt Acrylate, Methacrylate, Alkene, Styryl, Vinyl und Epoxygruppen. Über diese Gruppen wird dann die organisch vernetzbare Funktion in das anorganische Netzwerk eingebaut. Die metallorganische Verbindung wird zu einem metallischen Precursor kondensiert, wobei das Metall aus den Gruppen Ib bis VIIIb des Periodensystems ausgewählt ist.

Bevorzugt wird ein Katalysator eingesetzt, um die Polykondensationsreaktion zu kontrollieren und zu beschleunigen. Besonders gute Ergebnisse werden erzielt, wenn als Katalysator Bariumhydroxyd, Amine, Salzsäure, Essigsäure und/oder Tetrabutylammoniumfluorid (TBAF) eingesetzt wird.

Bevorzugt wird als Silan eine Verbindung der allgemeinen Formel II

RₙSiX₍₄₋ₙ₎

in der die Reste gleich oder verschieden sind und folgende Bedeutung haben:

R = Alkyl, Alkenyl, Alkinyl, Aryl, Arylalkyl, Alkylaryl, Arylalkenyl, Alkenylaryl, Arylalkinyl oder Alkinylaryl, wobei diese Reste durch 0- und/oder durch S-Atome und/oder durch die Gruppe -NR" unterbrochen sein können und einen oder mehrere Substituenten aus der Gruppe bestehend aus gegebenenfalls substituierten Amino-, Amid-, Aldehyd-, Keto-, Alkylcarbonyl-, Carboxy-, Mercapto-, Cyano-, Hydroxy-, Alkoxy-, Alkoxycarbonyl-, Sulfonsäure-, Phosphorsäure-, (Meth)acryloxy-, Epoxy- oder Vinyl-Gruppen tragen;
X = Wasserstoff, Halogen, Alkoxy, Acyloxy, Alkylcarbonyl, Alkoxycarbonyl oder -NR"₂, mit R" gleich Wasserstoff und/oder Alkyl und n = 1, 2 oder 3,
eingesetzt. Besonders bevorzugt wird als Silan ein modifiziertes oder unmodifiziertes Styrylsilan, insbesondere ein Styrylethyltrimethoxysilan, eingesetzt.

Für die Metallverbindung wird das Metall M vorzugsweise ausgewählt aus der Gruppe bestehend aus Titan, Zirkonium, Zink, Eisen, Kobalt, Nickel und den Lanthanoiden.

Als organische Lösungsmittel werden vorzugsweise Ketone, Ester, aromatische Lösungsmittel, cyclische oder nicht-cyclische Ether, Alkohole sowie protische oder aprotische Lösungsmittel eingesetzt.

Bevorzugt wird der Beschichtungszusammensetzung zusätzlich mindestens ein Lösungsmittel zugesetzt. Hierbei sind als Lösungsmittel insbesondere Cyclopentanon, Propylacetat, 2-Butanon und Ethanol bevorzugt.

Weiterhin wird in einer bevorzugten Ausführungsvariante des erfindungsgemäßen Verfahrens der Beschichtungszusammensetzung ein Initiator und/oder Härter zugesetzt, der die Ausbildung des organischen Netzwerkes initiiert. Diese Zusatzstoffe können sowohl vor, während, als auch nach der eigentlichen Polykondensationsreaktion zugesetzt werden.

Weiterhin werden bevorzugt Benetzungshilfsmittel aber auch andere Additive der Beschichtungszusammensetzung zugesetzt.

Erfindungsgemäß wird auch eine transparente Beschichtungszusammensetzung mit einem Brechungsindex von 1,35 bis 1,95 bereitgestellt, die nach dem Verfahren nach einem der Ansprüche 1 bis 11 herstellbar ist.

Besonders bevorzugt sind hierbei Beschichtungszusammensetzungen mit einem Brechungsindex im Bereich von 1,53 bis 1,59.

Die erfindungsgemäße Beschichtungszusammensetzung kann im IR-Spektrum in einer bevorzugten Ausführungsform im Wesentlichen keine OH-Banden aufweisen und ist damit im Wesentlichen frei von OH-Gruppen.

Bevorzugt weist die Beschichtungszusammensetzung keine zugesetzten Nanopartikel auf. Dies ist besonders überraschend, da gemäß dem Stand der Technik Nanopartikel zugesetzt werden, um erhöhte Brechungsindices zu erhalten.

Erfindungsgemäß wird ebenso ein Verfahren zur Beschichtung eines Substrates mit einer wie zuvor beschriebenen Beschichtungszusammensetzung bereitgestellt. Hierbei wird die Beschichtungszusammensetzung auf dem Substrat aufgetragen und im Anschluss die Beschichtungsmasse ausgehärtet.

Als Auftragungsverfahren sind zum einen flächige Auftragungsverfahren, wie z.B. Spin-Coating, Dip-Coating, Rakeln oder Sprühen bevorzugt. Zum anderen werden bevorzugt auch strukturierende Auftragungsverfahren, wie Siebdruck, Tampondruck, Ink-Jet. Offset-Druck sowie Tief-und Hochdruck angewendet.

Die Aushärtung erfolgt dabei bevorzugt thermisch und/oder photochemisch.

Als Substrat werden bevorzugt Materialien aus der Gruppe bestehend aus Metallen, Halbleitern, Substraten mit oxidischen Oberflächen, Gläsern, Folien, printed circuit boards (PCB), Polymere, Heterostrukturen, Papier, Textilien und/oder Verbunde von diesen eingesetzt.

Erfindungsgemäß wird ebenfalls ein transparent beschichtetes Substrat, das nach dem Verfahren nach einem der Ansprüche 12 bis 19 herstellbar ist, bereitgestellt.

Bevorzugt weist die Beschichtung dieser Substrate einen Brechungsindex von mindestens 1,62 bis 2,75, besonders bevorzugt einen Brechungsindex von mindestens 1,7 bis 2,1 auf.

Verwendung finden die erfindungsgemäßen Gegenstände bei jeglicher Art optischer Mikrosysteme, insbesondere Gitter, Linsen, Beschichtungen, photonische Kristalle oder andere photonische Strukturen, Multilayer, Spiegel, reflektierende Schichten, Schichten in Multilayer-Aufbauten für Antireflexschichten und Filter, flächige architektonische Anwendungen sowie reflektierende und antireflektierende Brillenbeschichtungen. Ebenso ist die Photokatalyse und die Photovoltaik ein geeignetes Anwendungsfeld.

Anhand der nachfolgenden Beispiele und Figuren soll der erfindungsgemäße Gegenstand näher erläutert werden, ohne diesen auf die hier dargestellten Ausführungsformen zu beschränken.

Fig. 1 zeigt ein IR-Spektrum einer erfindungsgemäßen Beschichtungszusammensetzung, hergestellt gemäß Beispiel 1.

Fig. 2 zeigt das ¹³C-NMR-Spektrum einer erfindungsgemäßen Beschichtungszusammensetzung gemäß Beispiel 1.

Fig. 3 zeigt ein Absorptionsspektrum einer erfindungsgemäßen Beschichtungszusammensetzung gemäß Beispiel 1.

Fig. 4 zeigt eine hochaufgelöste mikroskopische Aufnahme einer erfindungsgemäßen Beschichtung, wie sie in Beispiel 1 hergestellt wurde.

Fig. 5 zeigt ein Transmissionsspektrum einer erfindungsgemäßen Beschichtung, wie sie in Beispiel 1 hergestellt wurde.

Fig. 6 zeigt ein IR-Spektrum einer erfindungsgemäßen Zusammensetzung, wie sie in Beispiel 2 hergestellt wurde.

Fig. 7 zeigt ein Absorptionsspektrum einer erfindungsgemäßen Beschichtungszusammensetzung gemäß Beispiel 2.

Fig. 8 zeigt eine hochaufgelöste mikroskopische Aufnahme einer nach Beispiel 2 hergestellten Beschichtung.

Fig. 9 zeigt ein Transmissionsspektrum einer nach Beispiel 2 hergestellten Beschichtung.

### Beispiel 1

### 1. Herstellung des Harzes

0,0625 mol Diphenylsilandiol und 0,02125 mol 3-Methacryloxypropyltrimethoxysilan werden zu 0,3447 mol Cyclopentanon gegeben. Als Katalysator werden 0,125 mmol Tetrabutylammoniumfluorid verwendet. Die Mischung wird 4 Stunden lang gerührt, anschließend werden 0,045 mol Titanethoxid zugesetzt. Nach zwei Tagen wird eine orangefarbene und klare Lösung erhalten. Das Lösungsmittel wird mittels eines Rotationsverdampfers mit nachfolgendem Abpumpen unter Vakuum entfernt. Es wird ein dunkles orangefarbenes Harz erhalten.

### 2. Charakterisierung des Harzes

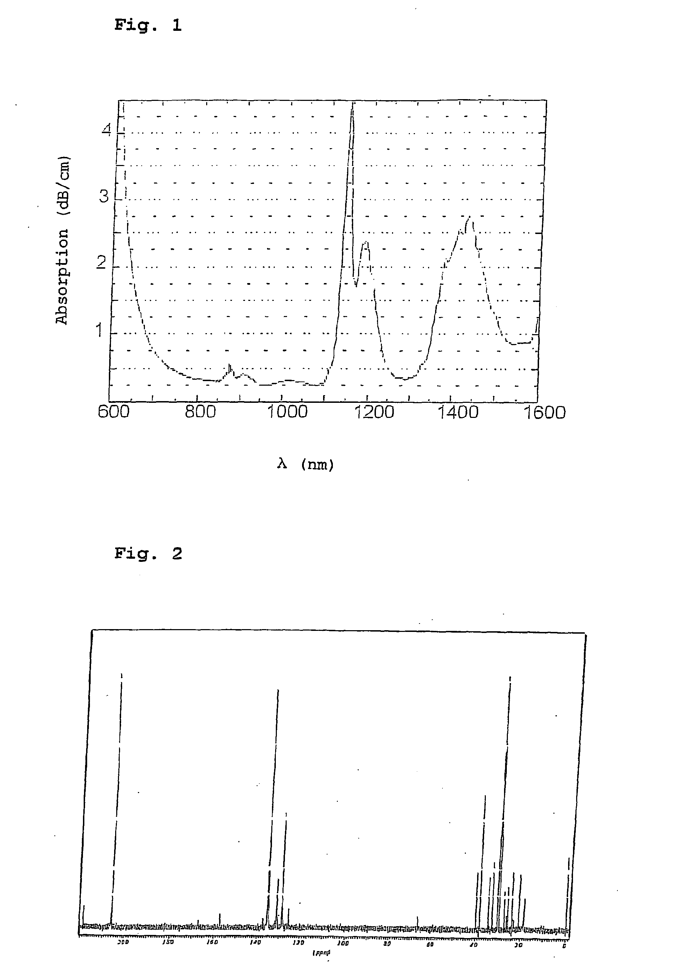

In Fig. 1 ist das IR-Spektrum des Harzes dargestellt. Dieses zeigt keine Schwingungsbanden bei 3600 cm⁻¹, was denen der OH-Gruppen entspricht. Dies bedeutet, dass im Harz nahezu keine OH-Gruppen enthalten sind. Das ²⁹Si-NMR-Spektrum des Harzes zeigt, dass das Diphenylsilandiol und das 3-Methacryloxypropyltrimethoxysilan als reagierte Produkte in dem Harz enthalten sind. Der Brechungsindex des Harzes bei 25 °C beträgt 1,5922, wobei eine geringe Menge Lösungsmittel im Harz enthalten ist.

Fig. 2 zeigt ein ¹³C-NMR-Spektrum, in dem Cyclopentanon im Harz nachgewiesen werden konnte (drei Peaks bei d=22,9, 38,3 und 167,0 ppm). Dies könnte darauf zurückzuführen sein, dass das Lösungsmittel nicht vollständig mit dem Rotationsverdampfer entfernt wurde. Ebenso konnte mit FT-IR-Messung eine Schwingungsbande bei 1745 cm⁻¹ detektiert werden, die auf die C=O-Bindung des Cyclopentanons zurückzuführen ist. Auf der anderen Seite zeigt das ¹³C-NMR-Spektrum sieben neue Peaks mit gleicher Intensität. Für die Zuordnung der Peaks wurde das ¹³C-DEPT(distortion enhancement by polarisation transfer)-Verfahren durchgeführt. Dieses Spektrum zeigt sechs Peaks, die mit den CH₂-Gruppen (d=20,6, 25,7, 27,4, 32,7, 34,3 und 39,9 ppm) korrespondieren, während der verbleibende Peak, der mit DEPT nicht detektierbar ist, als quaternärer Kohlenstoff angesehen wird (d=157,2 ppm). Aus dem NMR-Spektrum kann geschlossen werden, dass eine Titan-induzierte Reaktion des Cyclopentanons stattgefunden hat. So konnten keine Peaks für das ursprüngliche Titanethoxid bei d=19,4 ppm für CH₃ und bei d=70,6 ppm für CH₂ bestimmt werden. Hieraus kann geschlossen werden, dass das Titan ebenfalls reagiert hat und in reagierter Form in das Harz eingebaut wurde. Das ¹³C-NMR-Spektrum zeigt die Abwesenheit von Si-OCH₃ von Methacryloxypropyltrimethoxysilan (MEMO) (bei d=50,9 ppm), was bedeutet, dass das MEMO im Harz als vollständig reagierte Verbindung enthalten ist.

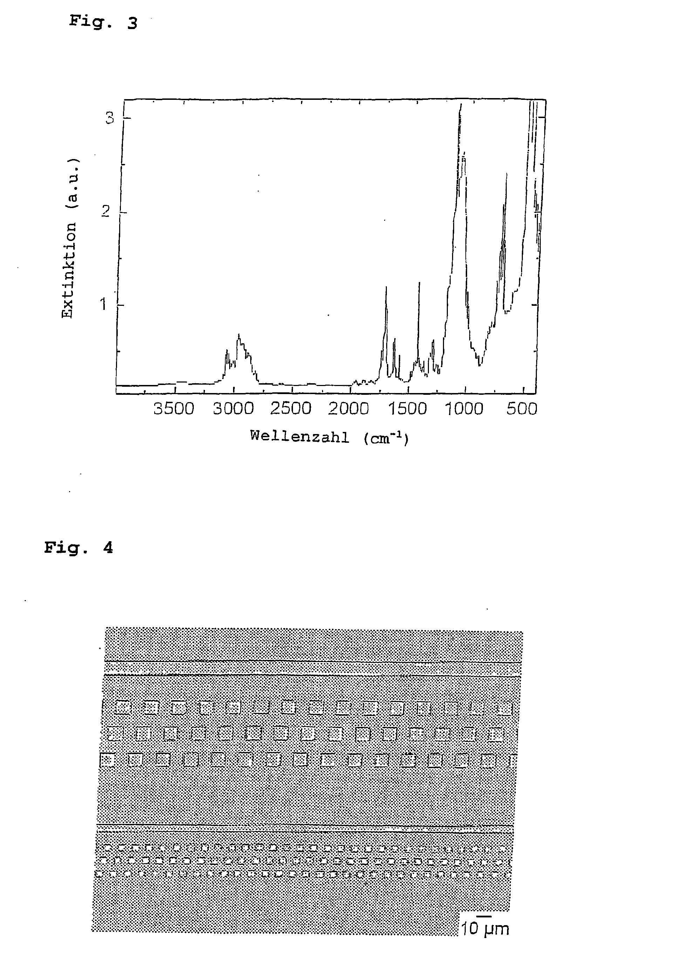

In Fig. 3 ist ein Absorptionsspektrum des Harzes gezeigt. Die Absorption im Datacom-Bereich (bei 830 nm) beträgt etwa 0,3 dB/cm und im Telecom-Bereich etwa 0,36 dB/cm (bei 1310 nm) bzw. etwa 0,87 dB/cm (bei 1550 nm). Die SAXS-Messung des Harzes zeigt die Anwesenheit von sehr kleinen anorganischen oxidischen Einheiten von 2 nm Größe. Die Gelpermeationschromatographie ergab, dass das Molekulargewicht unterhalb von 750 g/mol (Standard: Polystyrol) liegt.

### 3. Beschichtung und Mustererzeugung

Das Harz wird mit einem geeigneten Lösungsmittel wie Propylacetat unter Zusatz eines UV-Initiators, wie z.B. Irgacure 369, verdünnt. Zur Erzielung einer höchstmöglichen optischen Qualität wird das Material durch einen Filter mit 0,2 µm Porengröße gefiltert. Die Beschichtung erfolgt durch Spin-Coating. Nachfolgend wird die Beschichtung unter Verwendung einer Belichtungseinrichtung (Mask Aligner) UV-Licht ausgesetzt. Nach dem Entwicklungsschritt wird die Probe schließlich thermisch ausgehärtet.

### 4. Charakterisierung der Beschichtung

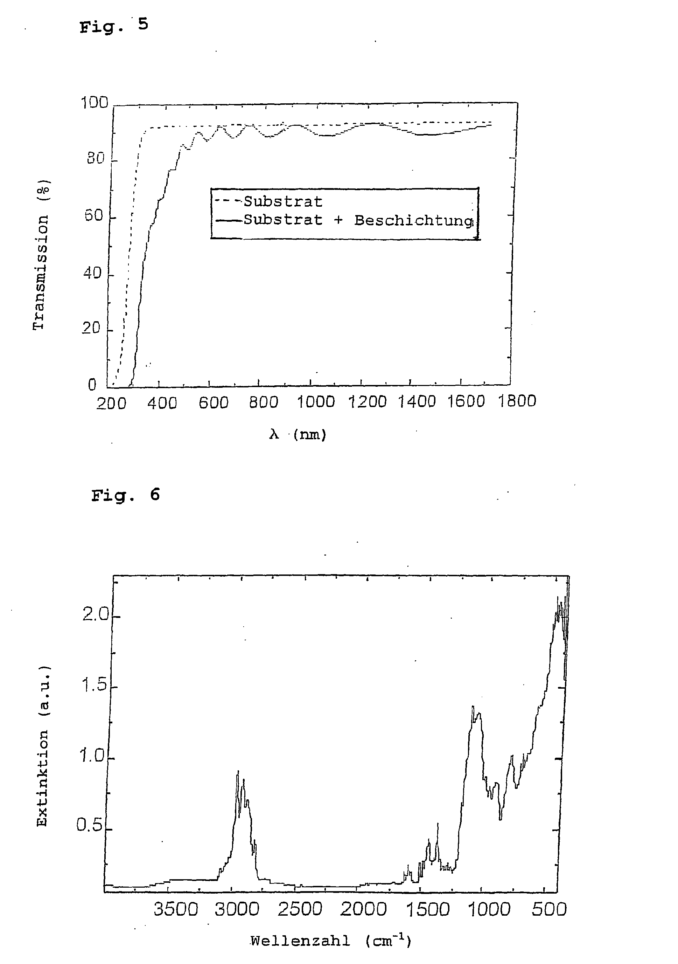

In Fig. 4 ist eine mikroskopische Aufnahme dargestellt, die hochaufgelöste Strukturen zeigt. Der Brechungsindex der Beschichtung beträgt zwischen 1,64 und 1,65 für die Wellenlängen zwischen 1448 und 812 nm. In Fig. 5 ist zu erkennen, dass die Transmission der Schicht für Wellenlängen > 500 nm sehr hoch ist.

### Beispiel 2

### 1. Synthese des Harzes

0,0201 mol Styrylethyltrimethoxysilan und 0,0402 mol Titanethoxid werden mit 1,08 g HCl (37%) gemischt. Die weiße Mischung wird 1 Stunde lang gerührt, anschließend liefert eine Behandlung bei 65 °C unter Rückfluss für die Dauer von 24 Stunden eine transparente gelbliche Lösung. Die bei der Kondensation gebildeten Lösungsmittel werden mittels eines Rotationsverdampfers und einem nachfolgenden Abpumpen unter Vakuum entfernt. Es wird ein transparentes gelbliches Harz erhalten.

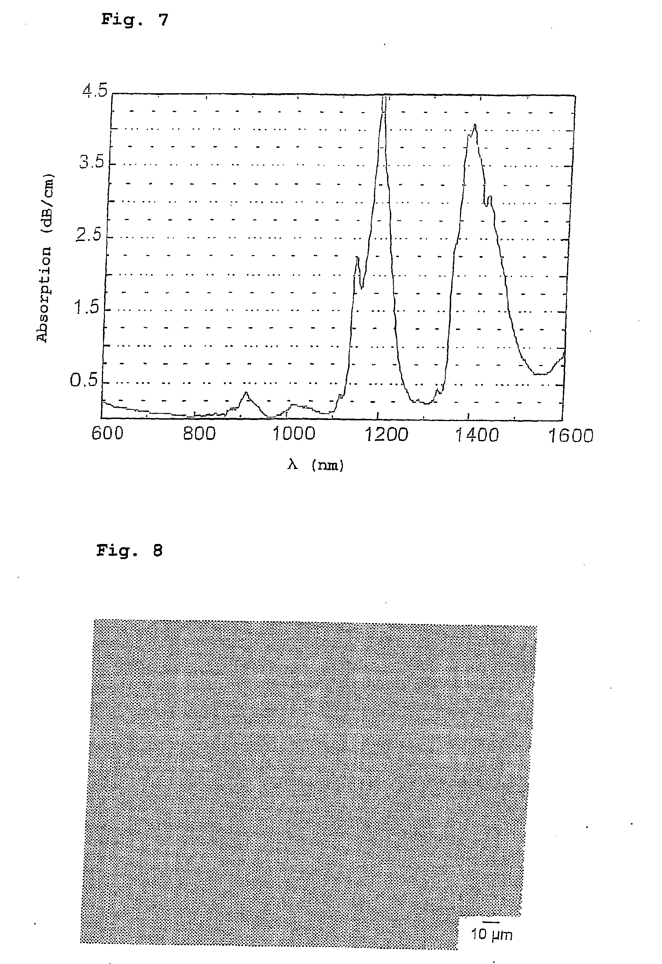

2. Der durch Karl-Fischer-Titration gemessene Wassergehalt ist kleiner 0,03 %. In Fig. 6 ist das IR-Spektrum des Harzes dargestellt, das keine signifikanten Schwingungsbanden bei 3600 cm⁻¹ zeigt, was auf nahezu keine OH-Gruppen durch das IR-Spektrum schließen lässt. Das ²⁹Si-MNR-Spektrum des Harzes zeigt, dass das Styrylethyltrimethoxysilan im Harz als reagiertes Produkt enthalten ist. Der Brechungsindex des Harzes bei 25 °C beträgt 1,5979. In Fig. 7 ist das Absorptionsspektrum dargestellt. Es zeigt eine Absorption im Datacom-Bereich (bei 830 nm) von etwa 0,06 dB/cm und im Telecom-Bereich von etwa 0,22 dB/cm (bei 1310 nm) bzw. 0,63 dB/cm (bei 1550 nm).

### 3. Beschichtung und Mustererzeugung

Das Harz wird in einem geeigneten Lösungsmittel wie Propylacetat verdünnt, und es wird ein Um-initiator (Irgacure 369) zugesetzt. Zur Erzielung der höchstmöglichen optischen Qualität wird das Material durch einen Filter mit 0,2 µm Porengröße gefiltert. Die Beschichtung wird durch Spin-Coating durchgeführt. Nachfolgend wird die Beschichtung in einer Maske UV-Licht ausgesetzt. Nach dem Entwicklungsschritt wird die Probe schließlich thermisch ausgehärtet.

### 4. Charakterisierung der Beschichtung

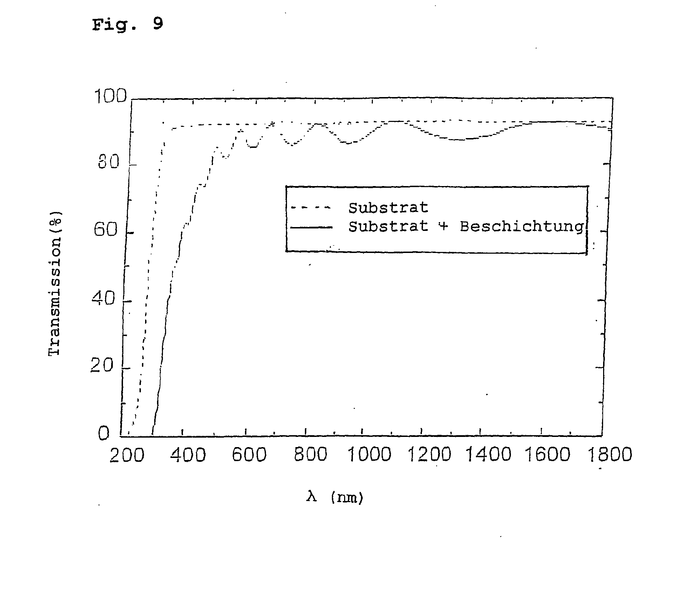

In Fig. 8 ist eine mikroskopische Aufnahme der Beschichtung dargestellt. Diese zeigt hochaufgelöste Strukturen. Der Brechungsindex der Beschichtung bei 1150 nm beträgt zwischen 1,67 und 1,70 (für die Wellenlängen zwischen 1286 und 926 nm). Das in Fig. 9 dargestellte Transmissionsspektrum der Beschichtung zeigt sehr hohe Transmissionen für Wellenlängen ≥ 500 nm.

## Patentansprüche

1. Verfahren zur Herstellung einer transparenten Beschichtungszusammensetzung durch eine Polykondensation von
a) mindestens einem zur Ausbildung eines anorganischen Netzwerks geeignetem hydrolisierbarem und/oder kondensierbarem Silan der allgemeinen Formel I,
RₙSiX₍₄₋ₙ₎ I
in der die Reste gleich oder verschieden sind und folgende Bedeutung haben:
R = Alkyl, Alkenyl, Alkinyl, Aryl, Arylalkyl, Alkylaryl, Arylalkenyl, Alkenylaryl, Arylalkinyl oder Alkinylaryl, wobei diese Reste durch 0- und/oder durch S-Atome und/oder durch die Gruppe -NR" unterbrochen sein können und einen oder mehrere Substituenten aus der Gruppe bestehend aus gegebenenfalls substituierten Amino-, Amid-, Aldehyd-, Keto-, Alkylcarbonyl-, Carboxy-, Mercapto-, Cyano-, Hydroxy-, Alkoxy-, Alkoxycarbonyl-, Sulfonsäure-, Phosphorsäure-, (Meth)acryloxy-, Epoxy- oder Vinyl-Gruppen tragen;
X = Wasserstoff, Halogen, Alkoxy, Acyloxy, Alkylcarbonyl, Alkoxycarbonyl oder -NR"₂, mit R" gleich Wasserstoff und/oder Alkyl; n = 1, 2 oder 3,
wobei das Silan mindestens eine thermisch und/oder photochemisch vernetzbare funktionelle Gruppe ausgewählt aus der Gruppe bestehend aus Acrylat-, Methacrylat-, Alken-, Styryl-, Vinyl- und Epoxygruppen zur Ausbildung eines organischen Netzwerks aufweist, und
b) mindestens einer Metallverbindung der allgemeinen Formel II
MZₚ II
mit M ausgewählt aus der Gruppe bestehend aus Elementen der Gruppen Ib bis VIIIb des Periodensystems, Z einem entsprechenden Gegenion zum Ladungsausgleich oder einem Liganden und p = 2 bis 4,
in einem organischen Lösungsmittel in Gegenwart eines Katalysators, wobei die Kondensation bei einer Temperatur zwischen 20 und 80°C über eine Reaktionsdauer von 24 bis 144 h durchgeführt wird und Temperatur und Reaktionsdauer derart aufeinander abgestimmt werden, dass eine Vernetzung der funktionellen Gruppen und damit die Ausbildung eines organischen Netzwerks verhindert wird,
und der Beschichtungszusammensetzung zusätzlich mindestens ein Initiator und/oder Härter zugesetzt wird.

2. Verfahren nach einem der vorhergehenden Ansprüche,
**dadurch gekennzeichnet, dass** das Silan ein modifiziertes oder unmodifiziertes Styrylsilan, insbesondere ein Styrylethyltrimethoxysilan ist.

3. Verfahren nach einem der vorhergehenden Ansprüche,
**dadurch gekennzeichnet, dass** M ausgewählt ist aus der Gruppe bestehend aus Titan, Zirkonium, Zink, Eisen, Kobalt, Nickel und den Lanthanoiden.

4. Verfahren nach einem der vorhergehenden Ansprüche,
**dadurch gekennzeichnet, dass** das organische Lösungsmittel ausgewählt ist aus der Gruppe bestehend aus Ketonen, Estern, aromatischen Lösungsmitteln, cyclischen oder nicht-cyclischen Ethern, Alkoholen sowie protischen oder aprotischen Lösungsmitteln.

5. Verfahren nach einem der vorhergehenden Ansprüche,
**dadurch gekennzeichnet, dass** als Katalysator saure, basische und/oder nukleophile Katalysatoren, insbesondere Bariumhydroxid, Amine, Salzsäure, Essigsäure und/oder Tetrabutylammoniumfluorid (TBAF), verwendet werden.

6. Verfahren nach einem der vorhergehenden Ansprüche,
**dadurch gekennzeichnet, dass** vor der Kondensation eine Hydrolyse der Silane durchgeführt wird.

7. Verfahren nach einem der vorhergehenden Ansprüche,
**dadurch gekennzeichnet, dass** die für die Hydrolyse eingesetzte Wassermenge mittels feuchtigkeitsbeladener Adsorbentien, wasserhaltiger organischer Lösungsmittel, Salzhydraten oder Wasser bildender Systeme eingetragen wird.

8. Verfahren nach einem der vorhergehenden Ansprüche,
**dadurch gekennzeichnet, dass** der Beschichtungszusammensetzung zusätzlich mindestens ein Lösungsmittel zugesetzt wird.

9. Verfahren nach einem der vorhergehenden Ansprüche,
**dadurch gekennzeichnet, dass** der Beschichtungszusammensetzung mindestens ein Benetzungshilfsmittel oder ein anderes Additiv zugesetzt wird.

10. Transparente Beschichtungszusammensetzung mit einem Brechungsindex von 1,35 bis 1,95, die nach dem Verfahren nach einem der Ansprüche 1 bis 9 herstellbar und frei von zugesetzten Nanopartiein ist.

11. Beschichtungszusammensetzung nach Anspruch 10,
**dadurch gekennzeichnet, dass** die Beschichtungszusammensetzung einen Brechungsindex von 1,53 bis 1,59 aufweist.

12. Beschichtungszusammensetzung nach einem der Ansprüche 10 oder 11,
**dadurch gekennzeichnet, dass** die Beschichtungszusammensetzung im IR-Spektrum im wesentlichen keine OH-Banden zeigt und damit frei von OH-Gruppen ist.

13. Verfahren zur Beschichtung eines Substrats mit einer Beschichtungszusammensetzung nach einem der Ansprüche 10 bis 12, bei dem die Beschichtungszusammensetzung auf dem Substrat aufgetragen wird und im Anschluss die Beschichtungszusammensetzung ausgehärtet wird.

14. Verfahren nach Anspruch 13,
**dadurch gekennzeichnet, dass** die Beschichtungsmasse durch flächige Auftragungsverfahren, insbesondere Spin-Coating, Dip-Coating, Rakeln oder Sprühen, oder durch strukturierende Auftragungsverfahren, insbesondere Siebdruck, Tampondruck, Ink-Jet, Offset-Druck sowie Tief- und Hochdruck aufgebracht wird.

15. Verfahren nach einem der Ansprüche 13 oder 14,
**dadurch gekennzeichnet, dass** die Aushärtung thermisch und/oder photochemisch erfolgt.

16. Verfahren nach einem der Ansprüche 13 bis 15,
**dadurch gekennzeichnet, dass** die photochemisch Aushärtung durch Ein- oder Mehrphotonenprozesse erfolgt.

17. Verfahren nach einem der Ansprüche 13 bis 16,
**dadurch gekennzeichnet, dass** das Substrat ausgewählt ist aus der Gruppe bestehend aus Metallen, Halbleitern, Substraten mit oxidischen Oberflächen, Gläsern, Folien, printed circuit boards (PCB), Polymeren, Heterostrukturen, Papier, Textilien und/oder Verbunden hiervon.

18. Transparent beschichtetes Substrat herstellbar nach dem Verfahren nach einem der Ansprüche 13 bis 17.

19. Substrat nach Anspruch 18,
**dadurch gekennzeichnet, dass** die Beschichtung einen Brechungsindex von mindestens 1,62 aufweist.

20. Substrat nach einem der Ansprüche 18 oder 19,
**dadurch gekennzeichnet, dass** die Beschichtung einen Brechungsindex von mindestens 1,7 aufweist.

## Claims

1. A method for the production of a transparent coating composition by polycondensation of
a) at least one hydrolysable and/or condensable silane, suitable for forming an inorganic network, of the general formula I,
RₙSiX₍₄₋ₙ₎ I
in which the radicals are identical or different and have the following meaning:
R = alkyl, alkenyl, alkinyl, aryl, arylalkyl, alkylaryl, arylalkenyl, alkenylaryl, arylalkinyl or alkinylaryl, these radicals possibly being interrupted by O and/or by S atoms and/or by the group -NR" and bearing one or more substituents from the group consisting of optionally substituted amino, amide, aldehyde, keto, alkylcarbonyl, carboxyl, mercapto, cyano, hydroxy, alkoxy, alkoxycarbonyl, sulphonic acid, phosphoric acid, (meth)acryloxy, epoxy or vinyl groups;
X = hydrogen, halogen, alkoxy, acyloxy, alkylcarbonyl, alkoxycarbonyl or -NR"₂ , with R" being hydrogen and/or alkyl; n= 1, 2 or 3,
the silane having at least one thermally and/or photochemically cross-linkable functional group selected from the group consisting of acrylate, methacrylate, alkene, styryl, vinyl and epoxy groups for forming an organic network, and
b) at least one metal compound of the general Formula II
MZₚ II
with M being selected from the group consisting of elements of groups Ib to VIIIb of the periodic table, Z a corresponding counter-ion for balancing charges or a ligand and p = 2 to 4,
in an organic solvent in the presence of a catalyst, the condensation being carried out at a temperature of between 20 and 80°C for a reaction time of 24 to 144 h and the temperature and reaction time being matched to one another such that cross-linking of the functional groups and hence the formation of an organic network is prevented,
and additionally at least one initiator and/or hardener is added to the coating composition.

2. A method according to one of the preceding claims,
**characterised in that** the silane is a modified or unmodified styrylsilane, in particular a styrylethyltrimethoxysilane.

3. A method according to one of the preceding claims,
**characterised in that** M is selected from the group consisting of titanium, zirconium, zinc, iron, cobalt, nickel and the lanthanides.

4. A method according to one of the preceding claims,
**characterised in that** the organic solvent is selected from the group consisting of ketones, esters, aromatic solvents, cyclic or non-cyclic ethers, alcohols and also protic or aprotic solvents.

5. A method according to one of the preceding claims,
**characterised in that** acidic, basic and/or nucleophilic catalysts, in particular barium hydroxide, amines, hydrochloric acid, acetic acid and/or tetrabutylammonium fluoride (TBAF), are used as catalyst.

6. A method according to one of the preceding claims,
**characterised in that** hydrolysis of the silanes is carried out before the condensation.

7. A method according to one of the preceding claims,
**characterised in that** the amount of water used for the hydrolysis is introduced by means of moisture-laden adsorbents, water-containing organic solvents, salt hydrates or water-forming systems.

8. A method according to one of the preceding claims,
**characterised in that** additionally at least one solvent is added to the coating composition.

9. A method according to one of the preceding claims,
**characterised in that** at least one wetting aid or another additive is added to the coating composition.

10. A transparent coating composition with a refractive index of 1.35 to 1.95, which can be produced according to the method according to one of Claims 1 to 9 and is free from added nanoparticles.

11. A coating composition according to Claim 10, **characterised in that** the coating composition has a refractive index of 1.53 to 1.59.

12. A coating composition according to one of Claims 10 or 11,
**characterised in that** the coating composition exhibits substantially no OH bands in the IR spectrum and hence is free from OH groups.

13. A method for coating a substrate with a coating composition according to one of Claims 10 to 12, in which the coating composition is applied to the substrate and the coating composition is subsequently hardened.

14. A method according to Claim 13,
**characterised in that** the coating compound is applied by two-dimensional application methods, in particular spin-coating, dip-coating, doctoring or spraying, or by texturising application methods, in particular screen printing, pad printing, ink-jet printing, offset printing and also intaglio and typographic printing.

15. A method according to one of Claims 13 or 14,
**characterised in that** the hardening takes place thermally and/or photochemically.

16. A method according to one of Claims 13 to 15,
**characterised in that** the photochemical hardening takes place by single-photon or multiphoton processes.

17. A method according to one of Claims 13 to 16,
**characterised in that** the substrate is selected from the group consisting of metals, semiconductors, substrates with oxidic surfaces, glasses, films, printed circuit boards (PCB), polymers, heterostructures, paper, textiles and/or composites thereof.

18. Transparently coated substrate which can be produced according to the method according to one of Claims 13 to 17.

19. A substrate according to Claim 18,
**characterised in that** the coating has a refractive index of at least 1.62.

20. A substrate according to one of Claims 18 or 19,
**characterised in that** the coating has a refractive index of at least 1.7.

## Revendications

1. Procédé de préparation d'une composition transparente pour revêtements par une polycondensation de
a) au moins un silane hydrolysable et/ou condensable, convenant à la formation d'un réseau inorganique, de la formule générale I,
RₙSiX₍₄₋ₙ₎ I
dans laquelle les radicaux sont identiques ou différents et ont la signification suivante :
R = alkyle, alcényle, alcynyle, aryle, arylalkyle, alkylaryle, arylalcényle, alcénylaryle, arylalcynyle ou alcynylaryle, ces radicaux pouvant être interrompus par des atomes de O et/ou de S, et/ou par le groupe NR" et porter un ou plusieurs substituants du groupe constitué en des groupes aminos, amides, aldéhydes, cétones, alkylcarbonyles, carboxyles, mercaptos, cyanos, hydroxyles, alcoxyles, alcoxycarbonyles, acides sulfoniques, acides phosphoriques, (méth)acryloxyles, époxydes ou vinyles, substitués le cas échéant ;
X = un hydrogène, un halogène, un alcoxyle, un acyloxyle, un alkylcarbonyle, un alcoxycarbonyle ou un NR"₂, avec R" étant un hydrogène et/ou un alkyle ;
n= 1, 2 ou 3,
le silane comportant au moins un groupe fonctionnel réticulable thermiquement et/ou photochimiquement, choisi parmi le groupe constitué des groupes acrylates, méthacrylates, alcènes, styryles, vinyles et époxydes, pour la formation d'un réseau organique, et
b) au moins un composé métallique de la formule générale II
MZₚ II
avec M choisi parmi le groupe constitué des éléments des groupes Ib à VIIIb du tableau périodique, Z étant un ion antagoniste correspondant pour l'équilibrage des charges ou un ligand, et p = 2 à 4,
dans un solvant organique en présence d'un catalyseur, la condensation étant effectuée à une température comprise entre 20 et 80 °C pendant une durée de réaction de 24 à 144 heures et la température et la durée de réaction étant ajustées l'une à l'autre de telle sorte qu'une réticulation des groupes fonctionnels, et ainsi la formation d'un réseau organique, soient évitées,
et au moins un initiateur et/ou un durcisseur étant ajouté en plus à la composition de revêtement.

2. Procédé selon l'une quelconque des revendications précédentes,
**caractérisé en ce que** le silane est un styrylsilane modifié on non modifié, en particulier un styryléthyltriméthoxysilane.

3. Procédé selon l'une quelconque des revendications précédentes,
**caractérisé en ce que** M est choisi parmi le groupe constitué du titane, du zirconium, du zinc, du fer, du cobalt, du nickel et des lanthanides.

4. Procédé selon l'une quelconque des revendications précédentes,
**caractérisé en ce que** le solvant organique est choisi parmi le groupe constitué de cétones, d'esters, de solvants aromatiques, d'éthers cycliques ou non cycliques, d'alcools, ainsi que de solvants protiques ou aprotiques.

5. Procédé selon l'une quelconque des revendications précédentes,
**caractérisé en ce que** l'on utilise comme catalyseurs des catalyseurs acides, basiques et/ou nucléophiles, en particulier de l'hydroxyde de baryum, des amines, de l'acide chlorhydrique, de l'acide acétique et/ou du fluorure de tétrabutylammonium (TBAF).

6. Procédé selon l'une quelconque des revendications précédentes,
**caractérisé en ce qu'**avant la condensation, une hydrolyse des silanes est effectuée.

7. Procédé selon l'une quelconque des revendications précédentes,
**caractérisé en ce que** la quantité d'eau utilisée pour l'hydrolyse est introduite au moyen d'adsorbants chargés d'humidité, de solvants organiques contenant de l'eau, d'hydrates de sels, ou de systèmes formant de l'eau.

8. Procédé selon l'une quelconque des revendications précédentes,
**caractérisé en ce qu'**au moins un solvant est ajouté en plus à la composition du revêtement.

9. Procédé selon l'une quelconque des revendications précédentes,
**caractérisé en ce qu'**au moins un agent tensioactif auxiliaire ou un autre additif est ajouté à la composition du revêtement.

10. Composition transparente pour revêtements avec un indice de réfraction compris entre 1,35 et 1,95, qui peut être préparée par le procédé selon l'une quelconque des revendications 1 à 9 et qui est exempte de nanoparticules ajoutées.

11. Composition pour revêtements selon la revendication 10,
**caractérisée en ce que** la composition pour revêtements présente un indice de réfraction compris entre 1,53 et 1,59.

12. Composition pour revêtements selon l'une quelconque des revendications 10 ou 11,
**caractérisée en ce que** la composition pour revêtements ne montre dans le spectre IR pratiquement aucune bande de OH et est donc exempte de groupes OH.

13. Procédé de revêtement d'un substrat avec une composition pour revêtement selon l'une quelconque des revendications 10 à 12, dans lequel la composition pour revêtement est appliquée sur le substrat et la composition pour revêtement est ensuite durcie.

14. Procédé selon la revendication 13,
**caractérisé en ce que** la matière de revêtement est appliquée par des procédés d'application de grande étendue, en particulier par enduction centrifuge, par enduction par immersion, par spatulage ou par pulvérisation, ou par un procédé d'application structurée, en particulier par sérigraphie, par impression au tampon, par jet d'encre, par impression offset, ainsi que par impression en creux et en relief.

15. Procédé selon l'une quelconque des revendications 13 ou 14,
**caractérisé en ce que** le durcissement s'effectue thermiquement et/ou photochimiquement.

16. Procédé selon l'une quelconque des revendications 13 à 15,
**caractérisé en ce que** le durcissement photochimique s'effectue par des processus mono- ou multiphotoniques.

17. Procédé selon l'une quelconque des revendications 13 à 16,
**caractérisé en ce que** le substrat est choisi parmi le groupe constitué de métaux, de semi-conducteurs, de substrats à surface d'oxyde, de verres, de films, de cartes à circuits imprimés (PCB), de polymères, d'hétérostructures, de papier, de textiles et/ou de composites de ces derniers.

18. Substrat à revêtement transparent réalisable par le procédé selon l'une quelconque des revendications 13 à 17.

19. Substrat selon la revendication 18,
**caractérisé en ce que** le revêtement présente un indice de réfraction d'au moins 1,62.

20. Substrat selon l'une quelconque des revendications 18 ou 19,
**caractérisé en ce que** le revêtement présente un indice de réfraction d'au moins 1,7.
